# EUROPEAN PATENT APPLICATION

(11) **EP 3 606 011 A2**
(43) Date of publication of application: **05.02.2020**
(21) Application number: 19179615.0
(22) Date of filing: 13.03.2018
(51) Int. Cl.: H04L 29/08, H04L 29/06, H04W 12/10, H04W 4/02, H04W 12/12, H04W 88/02, H04L 12/18, H04W 4/06, H04N 21/231, H04N 21/433

(54) **NETWORK CONTROLLED CACHING**

(30) Priority: 13.03.2017 EP 17160527
(62) Divisional of application: 18161503.0
(71) Applicant: IPCom GmbH & Co. KG, 82049 Pullach (DE)
(72) Inventor: HANS, Martin, 31162 Bad Salzdetfurth (DE); SCHMIDT, Andreas, 38124 Braunschweig (DE); LUFT, Achim, 38118 Braunschweig (DE)
(74) Representative: Tomlinson, Edward James

(57) **Abstract**

The present invention provides a method for improving data caching by a user equipment, UE, device, the method comprising in a mobile communications network entity, receiving information from an internet content provider concerning data transmission to devices requesting to receive the data from the content provider; determining in the mobile communications network entity using the information data selected to be transmitted for caching by at least one UE device; obtaining by the mobile communications network entity the selected data from the internet content provider; and providing to the UE device the selected data for caching by the at least one UE device together with a certification measure.

## Description

The present invention relates to a method by means of which a mobile communications network may control the caching of data by a user equipment, UE, device.

In cellular mobile communication systems, the basic communication path is between one base station and a single UE device. In some systems, shared channels are used, which can generally be received by multiple mobile devices in a cell with an addressing mechanism associating the data currently present on a given resource of the shared channel to a single user.

Most cellular communication systems provide in addition a broadcast mechanism, i.e. data transmitted to all devices without addressing any specific device. The broadcast is used for control information that need to be received by mobile devices prior to accessing the cells, so called system information. In addition, some systems, e.g. UMTS and LTE, provide broadcast channels also for user data transmission, so called Multimedia Broadcast and Multicast Service (MBMS in UMTS and eMBMS in LTE). Both broadcast mechanisms use a physical channel and transport channels that are tailored for broadcast data and dedicated for that purpose. Some broadcast mechanisms require multiple cells providing (e)MBMS to transmit the same data synchronously (in Single Frequency Network (SFN) fashion).

In 3GPP an enhancement for eMBMS has been developed that allows the usage of the DL shared channel (usually only used for DL data to single dedicated devices) to all UEs of a cell, i.e. a broadcast on the shared channel. The feature is called "Single Cell Point-to-Multipoint" (SCPTM) transmission) which makes broadcast transmissions easy to deploy for operators as they don't require cell synchronization and they allow different content in different cells.

Caching of data is a known technique of storing data that has been received once from a data source in order to reproduce the data when it is requested again. Caching is used in network proxies for networks in which multiple users require the same data from a content source in order to lower the data traffic on connections between the proxy and the traffic source. Caching is also used in the world wide web: web content is cached in the network e.g. proxy servers as well as locally by browser applications.

Data caching via broadcast is also well known in the television landscape, e.g. for the so called teletext. The digital data imprinted on the TV broadcast signal was received by TVs or VCRs and re-produced after selection by a user of a particular page. In this case caching was used to accelerate data availability compared to the provided bandwidth over the air.

3GPP is currently developing the next generation (5G) core network (NG CN) and radio interface (New Radio). An efficient broadcasting mechanism is one features that is agreed to be developed during the standardization phase. The broadcast will probably utilize either dedicated broadcast channels, e.g. in SFN fashion, or data channels shared with other services.

Discussions about efficient data caching are just starting in 3GPP without any potential solutions being proposed yet. It is expected that mobile network operators will ensure 5G systems include mechanisms for data caching in the mobile devices using efficient delivery, e.g. broadcast or multicast. These mechanisms are controlled at least in parts by the operator and the operator may charge the subscriber for the related data delivery.

US 8,874,781 B2 proposes a server in a mobile network to assemble highly popular data ("social media entities") and broadcast the data to mobile devices. The data to be assembled is defined by the server by observing the social media providers and requests of users. A schedule broadcast in advance informs the devices about upcoming data broadcast so that the devices can selectively receive relevant data and store it in a cache on the device. The selection is based on user or application behaviour detected by the device, e.g. user's subscription to social media, his friends, people he follows or people his friends follow etc. Another aspect described is that of caching in the network in so called edge servers (near the radio access network, i.e. in the base stations). Another aspect of the patent is providing different content in different areas (also caching in different edge servers) because of an expected location-based accumulation of user interests.

US 2014/0059156 A1 describes predictive caching of content to facilitate instantaneous use of the content. A device such as a UE caches a portion of a certain data content and in the event of a user selecting the data content, allows the use of the portion of the data content from the cache as well as obtaining further parts of the data content. The predictive caching is controlled by the device. An entity in a computing environment may send recommendations to the device for subsequent predictive caching.

Also known are techniques for secure transmission of data, in particular protocols such as "transport layer security", TLS, and "secure socket layer", SSL. In TLS symmetric cryptography is used with an encryption algorithm and cryptographic keys being negotiated before data is transmitted. Each transmitted message includes a message identity check using a message authentication code.

TLS (or HTTPS) is being used to replace unsecure HTTP connections more and more. TLS has an effect of hindering a network operator's ability to analyse data exchanged between a UE and a server. The network can thus not base any caching decisions on the content consumed by users via secure connections.

Known mechanisms allow a network operator to analyse consumed data and predict based on the analysis further data consumption. Requests of the same data by further users or future data consumption by the same user may be predicted. Based on the prediction, data is collected from one or more content providers and delivered to the devices for caching.

The present invention provides a method for improving data caching by a user equipment, UE, device, the method comprising in a mobile communications network entity, receiving information from an internet content provider concerning data transmission to devices requesting to receive the data from the content provider; determining in the mobile communications network entity using the information data selected to be transmitted for caching by at least one UE device; obtaining by the mobile communications network entity the selected data from the internet content provider; and providing to the UE device the selected data for caching by the at least one UE device together with a certification measure.

The present invention overcomes issues mainly arising in scenarios where the mobile network operator needs or wants to keep the control of the caching mechanism, i.e. the operator controls which data is cached by the devices of its network (in contrast to the content provider).

Co-pending application claiming priority from EP 17160263.4 describes mechanisms for efficient caching data provisioning by the network and for caching in the mobile device. This application also describes feedback mechanisms from the mobile device to the network about data actually consumed from the cache for potential charging by the network operator. The features of the present invention may be combined with features of this co-pending application, which is incorporated by reference for all purposes, in any combination.

The known systems do not overcome the problems arising from usage of secure data delivery between mobile devices and an application server or content provider. Prior-art also does not describe network strategies to efficiently determine data to be delivered to mobile devices for caching.

One aspect of this invention is based on a cooperation between a content provider and a mobile network operator. A content provider may provide information to the network operator about data that is currently or was recently consumed from the content provider's server(s). Said information is generated by the content provider on the basis of requests from devices requesting to receive the data from the content provider. The information may in addition be based on data consumption information received from network operators as detailed further below. The information is transmitted from the content provider to the network operator via an interface that may involve pushing the information by the content provider, polling the data by the network operator or any combination of both.

In a further aspect of the invention, the information may be adapted to reflect only or mainly or in addition data that is or was delivered from the content provider to the users that are present in the operator's network. In other words, the content provider informs an operator about data that is currently or was recently delivered from the content provider to the operator's mobile network and excludes data that was delivered to other networks.

In the mobile network the content information received from the content provider is used to determine data that is broadcast or otherwise delivered to the mobile devices. The content information is received by one or more entities (servers) of the mobile network and the determining may be done in this or these entities.

The determined data to be broadcast is requested by the network operator from the content provider, subsequently received from the content provider, and then delivered to the mobile devices. The delivering to the mobile devices of the mobile network is done for caching in the mobile devices and for responding to potential future requests for the data (e.g., from applications locally installed on the mobile devices).

Alternatively, the data determined in the mobile network is delivered to entities within the mobile network. The entities store the data to efficiently deliver the data to mobile devices when requested or when resources (on the air interface) become available for delivery to the mobile devices. This caching within the mobile network in entities that are typically placed near the access network is often referred to as mobile edge computing.

In a further aspect of the invention, the network operator's request and/or the content information received from the content provider may include location information that provides information about areas in which the data is or was consumed. The location information may provide the network operator with information about in which areas or parts of his network the data is or was consumed or where the data was consumed more and where less. The location information may be in the form of geo-location data, area information (cities) or the like.

In the mobile network the location information may be used to determine data that is broadcast or otherwise delivered to mobile devices residing in an area or a sub-network of the mobile network and not delivered to mobile devices residing in other areas or sub-networks of the mobile network.

Alternatively, in the mobile network the location information may be used to determine data that is delivered to entities of the mobile network that serve specific areas or sub-networks of the mobile network. The entities store the data to efficiently deliver the data to mobile devices present in an area or a sub-network of the mobile network when requested or when resource become available for delivery to the mobile devices.

In a further aspect of this invention, the content information received from the content provider may comprise information about the (typical) usage or the (typical) users of the content. The information may comprise age information that represents the typical or average age or an age range. The information may also include gender information or any kind of description of typical users or groups of users. The information may also comprise usage information like time of day or day of week of typical data consumption or any kind of description of typical usage scenarios.

The information about users and/or usage may be used by the mobile network operator to adapt the caching data selection and steer the caching data delivery, so that the caching data is cached in devices and at a time where it is most useful for the user and the network.

It is not a requirement of this invention that a content provider informs the network operator about exactly which mobile device has consumed data and details about that data, as doing so would lead to a lack of user's privacy that is protected with intent by using TLS. According to the present invention the content provider merely informs the operator in an anonymous way, based on statistics.

The information about data that is or was consumed may comprise information about the number of repeated transmissions of a specific piece of data that is or was consumed. The repeated transmission may be repeated transmissions from the content provider to the mobile network or to one or more areas or sub-networks of the mobile network. Repeated transmission may be transmissions to different mobile devices present in the same mobile network, sub-network or area. The information may also comprise information about the size of specific pieces of data.

In a further aspect of the invention a network operator may receive information about data that is or was consumed from *multiple* content providers. In the mobile network the information may be used to prioritize the content data for broadcast (or other delivery methods) to mobile devices or to entities of the mobile network for caching of the data. The prioritization may take the number of transmissions and the size of specific pieces of data from the multiple content providers into account. The prioritization in the network may result in a list of pieces of data from multiple content providers to be broadcast or otherwise delivered to mobile devices or entities of the mobile network.

The prioritization of content data between different content providers may be based on business agreements between the mobile network operator and the content provider or on statistics of typical usage of the content of different providers or on preferences by the mobile network operator.

The content data that is or was consumed in the mobile network by various mobile devices may be any kind of digital data: In one illustrative example, the content data may comprise software updates for at least one of an operating system (e.g., a version update for Android or iOS) running on the mobile device and an application installed on a mobile device. In another illustrative example, the content data may comprise multimedia data, such as text files, videos, still images, pictures, audio files, ringtones and so on.

The information about content data that is or was consumed may identify specific pieces of data using a universal resource identifier (URI), a universal resource locator (URL), a description of the data in form of meta data (for instance, encoded per the MPEG-7 standard) or an identifier (for instance, derived by dint of hash calculations) that is recognized by the content provider so that it can be used by entities in the mobile network to request the data from the content provider.

The described provision of information about data that is or was consumed from the content provider is especially beneficial to network operators as it is independent of data security means applied to data delivery between the content provider and the mobile devices. It is also beneficial for the content provider as it increases efficiency of data delivery and the quality of experience for the user consuming the data.

A particular aspect of this invention is that information about content consumed, how often it was consumed and location of consumption from various content providers is used to derive data that is to be broadcast or otherwise delivered to mobile devices or entities of the mobile network.

Yet another aspect of the present invention comprises information sent either to the relevant application installed on the mobile device (e.g., in case of media data rendered by the application or application updates), or the mobile device itself (e.g., in case of firmware updates) about the method applied to preserve the content's integrity in the process of retrieving data from a content provider via a caching NW entity or via a cache implemented within the mobile device.

The user of the mobile device, may be notified about applied integrity protection methods. This is done ideally via a parameter in an interface to the application and / or in form of a pictogram via the mobile device's HMI by the application (Human Machine Interface).

The following inventive steps may be performed for implementing the present invention: By a content provider
transmitting information from a network of a content provider to a further network that informs the further network about (media) data (recently) transmitted by the network of a content provider to devices, wherein
the information includes first information about (media) data (recently) transmitted by the network of a content provider to devices of other networks,
the information includes additionally second information about (media) data (recently) transmitted by the network of a content provider to devices of the further network.

The further network may be the mobile network, the information may include location information, the information may include sub-network information, which may be network-address based information, the information may include the number of times a piece of (media) data was transmitted by the network of the content provider to other networks and/or to the further network.

An aspect providing enhanced security comprises:
transmitting the (media) data via a secure connection which secure connection ensures data integrity and origin,
signing the (media) data with a certificate of the content provider, and transmitting the (media) data together with the certificate to the further network via the secure connection.

A further aspect comprises: in the mobile network (by a caching data control entity or any network entity)
receiving information from a first network of a first content provider about (media) data (recently) transmitted by the first network of the first content provider to at least one other network,
determining from the information (media) data that is to be distributed within the mobile network for caching,
requesting the (media) data determined to be distributed within the mobile network for caching from the first network of the first content provider, and receiving the (media) data and distributing the (media) data within the mobile network.

Further aspects:
the at least one other network may be the mobile network the information may include location information
the information may include sub-network information, which may be network-address based information,
the information may include the number of times a piece of (media) data was transmitted by the network of the content provider to at least another network.
the mobile network may receive second information form a second network of a second content provider about (media) data (recently) transmitted by the second network of the second content provider to at least one other network, whereas the determining includes prioritizing (media) data of the first over the second network of the content provider.
the determining may be based on the received information and additional information, the additional information being one or more of (recent) requests from mobile devices to one or more third networks of third content providers requesting content delivery to the mobile devices; past (media) data usage patterns and user preferences stored in one or more data bases of the mobile network.
the distributing may include distributing different (media) data to different sub-networks of the mobile network based on location information or sub-network information received within the information.

To enhance security, the receiving the (media) data comprises receiving the (media) data via a secure connection which secure connection ensures data integrity and authentication of the data origin, digital signing the (media) data by the operator of the mobile network or the content provider, and distributing data (e.g. certificates) to the caching entities in order to verify the signature.

A still further aspect comprises: in the mobile device
receiving data to be cached in a local cache via a mobile network together with a signature ensuring integrity of the received (media) data, verifying the data using the signature and a certificate locally stored in the mobile device (or a memory connected, e.g. SIM) and reproducing the (media) data on request by a local application whereas the reproduced data is indicated to the local application to be integrity protected and authorized, and
manipulating a request message addressed by an application of a mobile device to a network of a content provider requesting transmission of (media) data in a way that the message informs the network of the content provider about consumption of the (media) data from a local cache.

The manipulating may be performed in the mobile device or in the mobile network.

Alternatively, manipulating a request message addressed by an application of a mobile device to a network of a content provider requesting transmission of (media) data in a way that the message informs the *mobile network* about consumption of the (media) data from a local cache.

Preferred embodiments of the invention will now be described, by way of example only, with reference to the accompanying drawings in which:
- Fig. 1: is a schematic representation of a network entity showing an exchange of data;
- Fig. 2: is a schematic representation of a communications network;
- Fig. 3: is a further schematic representation of a communications network;
- Fig. 4: is an exemplary flow chart showing a first embodiment of the invention for distributing data for caching;
- Fig. 5: is a flow chart showing data processing in a UE device; and
- Fig. 6: is an exemplary flow chart showing a second embodiment of the invention for distributing data for caching.

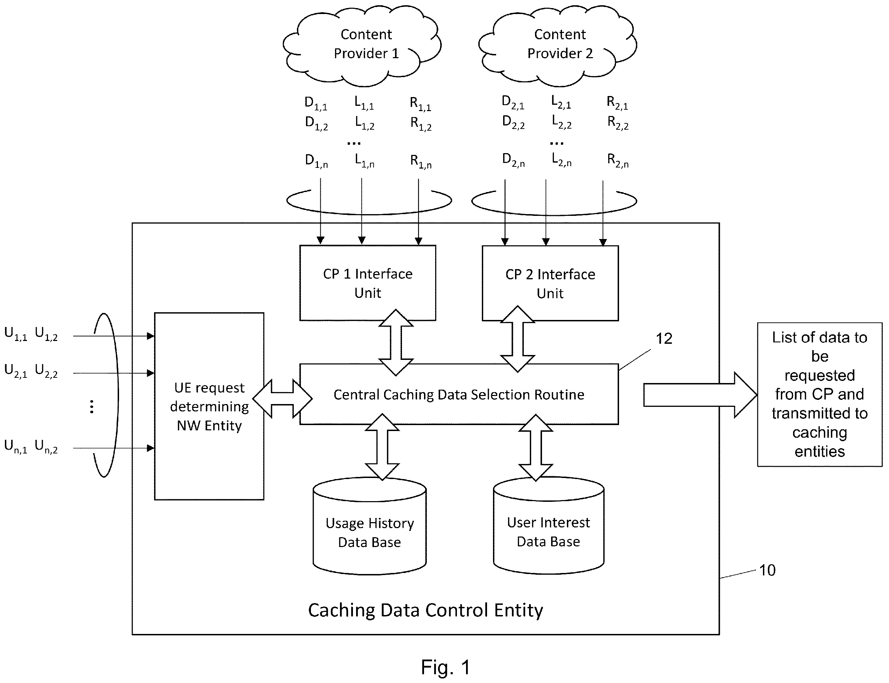

Referring to Fig. 1, there is shown a network entity for derivation of data to be broadcast in the form of a caching data control entity 10. In the figure, two content providers are depicted, content provider 1, CP1, and content provider 2, CP2, both delivering information about data (D_{x,y}), location (L_{x,y}) and repetitions (R_{x,y}) to the mobile network where x denotes a respective content provider and y identifies a specific piece of data. In addition, the network may have information available directly received from mobile devices, e.g. requests for content data over unsecured connections to content providers that do not cooperate with the mobile network operator. This information is denoted U_{x,y} where x denotes the mobile device and y denotes the request placed by the mobile device (and the related piece of data requested for). The information may be determined by an entity analysing the data flow of mobile devices, here denoted a "UE Request determining NW entity". Information may also be available in the network about data caching and/or data consumption in the past in a usage history data base and specific user interests in a user interest data base. From the different input values a central caching data selection routine 12 determines, using appropriate algorithms, the list of data that is currently to be cached by mobile devices or network entities. Further input parameters are possible. For instance, input parameters relating to time such as information about the day of the week, time of day, etc. may be sensible in some scenarios. Doing so would enable to combine knowledge of actual data consumption with empirical data consumption patterns, so that creation of caching schedules is enabled.

Data that is determined to be broadcast or otherwise delivered to the mobile devices or to entities of the mobile network depending on the content information received by the mobile network from the content provider is requested by the mobile network to be delivered by the content provider to the mobile network. The content provider may transmit the content data to the mobile network. The data may be integrity protected. The integrity protection may be used in the mobile device to verify the data integrity and replace the TLS security when data is requested by an application on the mobile device from a server of the content provider and the data is served from the local cache or an entity of the network instead. In order to replace transport security in general, it might be necessary to integrate the local cache for dedicated applications in the operating system of the UE; or in other words it is necessary that network security functions such as confidentiality or integrity protection is implemented in the network protocol stack underneath the local cache for all applications likely to request cached content. The data encryption of the TLS may be replaced by integrity protection between the content provider and the mobile network operator. This integrity protection could be implemented end-to-end or hop-by-hop with the network operator in between the content provider and the UE. The integrity protection is needed to ensure the integrity of all cached data.

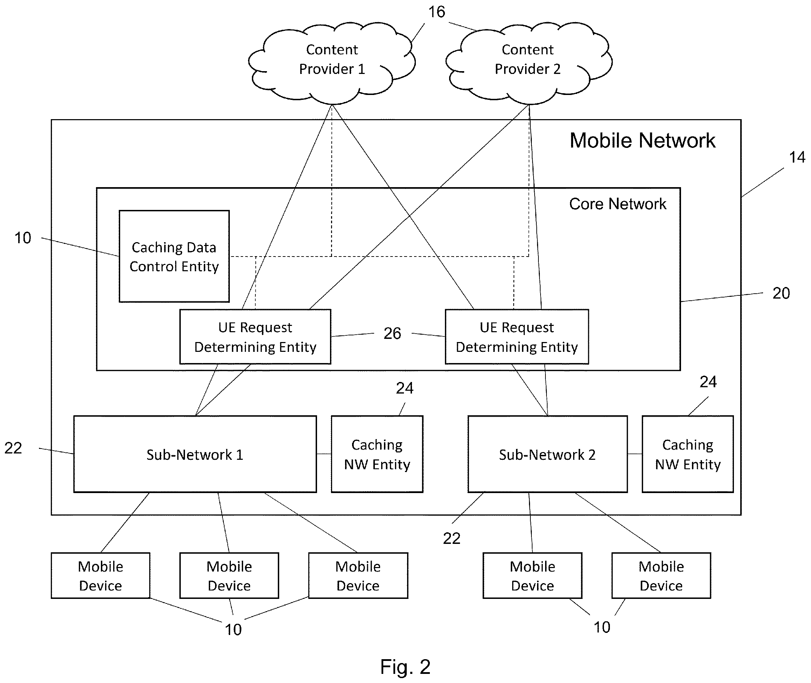

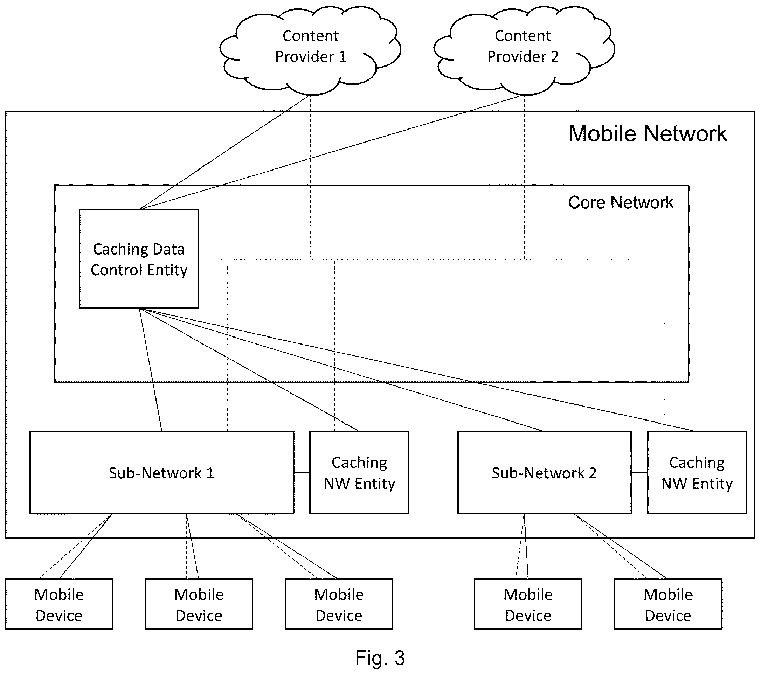

Fig. 2 depicts a deployment of the invention in an example network consisting of a mobile network 14, two content providers 16 and five mobile devices 18. Fig. 2 depicts exemplary information and data flows relevant for the mobile network to determine the content to be broadcast or otherwise delivered to mobile devices or network entities for caching. (This contrasts with Fig. 3 that depicts the same network but focusses on information and data flows relevant for caching data delivery and feedback information flow about actually consumed cached data).

Within the mobile network there is a core network 20 and two sub-networks 22, each sub-network connected to a respective caching network entity 24. The mobile devices 18 are each connected to one of the sub-networks. It may be foreseen that a mobile device is connected to more than one of the sub-networks. The sub-networks may constitute different access networks, e.g. sub-network 1 may be a cellular radio access network and sub-network 2 may be a wireless local area (WLAN) network. In an alternative embodiment, both sub-networks may contain cellular radio and WLAN access means, but sub-network 1 serves a limited geographical area while sub-network 2 serves another limited geographical area. Other deployments are possible in which sub-network 1 and 2 partially or fully overlap, they are dedicated to different services or to different types of devices. A modern term used for a specific kind of sub-networks within the core network of a mobile network is slices so that sub-network 1 may be part of one network slice and sub-network 2 may be part of another network slice.

Communications of/for the mobile devices pass the respective sub-network and the core network. Within the core network, functions for routing the data and applying quality of service measures may be applied that are not relevant to this invention and are thus not shown in Fig. 2. The data path through the core network may contain a UE request determining entity 26 which analyses the data transmitted from or to the mobile devices for retrieving data from content providers. The information determined from the analysis as well as similar information from content provider 1 and 2 are delivered to the caching data control entity 10. The respective information flow is shown in dashed lines in Fig. 2 to clearly distinguish the information from the content data transport shown with solid lines.

Fig. 3 depicts the same network with similar network entities as Fig. 2. The figure shows information and data flows relevant for delivery of caching data after the determining of data to be delivered for caching has been finalized. Fig. 3 also shows feedback information flow containing information about actually consumed data that was cached in the mobile devices or network entities. The caching data control entity requests content data determined to be broadcast or otherwise delivered from the respective content provider. The content provider delivers the data, here shown as solid lines to the caching data control entity. In other deployments, the data may be delivered to one or more different network entities. The entity that received the content delivers the content to the respective caching entities, either mobile devices residing within respective sub-networks or caching entities within the mobile network. The requesting of the content data as well as the delivery within the core network is based on the caching strategy determined by the caching data control entity in the previous step described in relation to Fig. 2. The respective caching entities may inform the caching data control entity about actually consumed data, shown in Fig. 3 as dashed lines. The caching data control entity may use the feedback information as input to its previously described determining step. It may also provide the information back to the content provider to enable the content provider to adapt its statistics.

Referring again to Fig. 1, the following exemplary scenario may apply and example data may be provided by the various entities:
CP1 may be a social network offering media in various media formats to followers of users or to the public. From all media offerings, three videos may be viewed more often than all other videos, these videos are "viral". CP1 informs connected networks with which it cooperates about the most consumed media. Within one example mobile network currently looked at (NW 1) a caching data control entity receives this information, as shown in Fig. 1. The following media information may be provided:
   Data information D_{1,1}
      www.socialplatform1.com/media/Video/abcdef1234567/ghjik89.m3u8 Media-Type: Video, H.264, Size: 57Mbyte, Length: 2'34, Resolution 720p, 1080p Location and repetition information L_{1,1}, R_{1,1}
      Global: 2.867.256 views (in 12h), Tendency: Up
      NW1: 256.765 views, Tendency: Up
      Area 1: 97.789 views, Tendency: Up
      Area 2: 21.897 views, Tendency: Up
      Area 3: 67.002 views, Tendency: Up
   Data information D_{1,2}
      www.socialplatform1.com/media/Video/zyxwvu98765/tsrqpo43.m3u8 Media-Type: Video, H.264, Size: 26Mbyte, Length: 1'15, Resolution 720p Location and repetition information L_{1,2}, R_{1,2}
      Global: 1.567.001 views (in 12h), Tendency: Stable
      NW1: 101.678 views, Tendency: Up
      Area 1: 65.789 views, Tendency: Stable
      Area 2: 1.987 views, Tendency: Down
      Area 3: 21.001 views, Tendency: Up
CP2 may be a news platform offering news in form of short video clips about events and celebrities. CP2 offers similar information to NW 1:
   Data information D_{2,1}
      www.newsplatform1.com/media/Video/qwert1234/zuio5678.m3u8 Media-Type: Video, H.265, Size: 15Mbyte, Length:0'34, Resolution 720p, 576p Location and repetition information L_{2,1}, R_{2,1}
      Global: 867.256 views (in 12h), Tendency: Stable
      NW1: 2.765 views, Tendency: Up
      Area 1: 9.789 views, Tendency: Up
      Area 2: 897 views, Tendency: Up
      Area 3: 3.002 views, Tendency: Up
      Data information D_{2,2}
      www.newsplatform1.com/media/Video/asdfg65748/hjkl392.m3u8 Media-Type: Video, H.265, Size: 16Mbyte, Length: 0'35, Resolution 720p, 576p Location and repetition information L_{2,2}, R_{2,2}
      Global: 1.987.021 views (in 12h), Tendency: Down
      NW1: 34.678 views, Tendency: Stable
      Area 1: 65.789 views, Tendency: Stable
      Area 2: 3.987 views, Tendency: Down
      Area 3: 8.601 views, Tendency: Stable

The information about views from the specific network NW 1 may be generated by the content providers based on the IP-addresses from which the requests for data are received. Every network operator has an IP-address space that is known and requests coming from the IP-address space of NW 1 are counted as a view for NW 1.

On the other hand, location information may be available at the content provider who may be a service provider offering services that are based on location information of mobile devices. This location information can be used to count requests from various areas like geographical regions, cities or the like. Together with IP-address space analysis above, the content provider can generate information about requests of a specific network and specific areas which may be very useful to mobile network operators.

The information is received by the caching data control entity of the example mobile network NW 1. Through the respective interface unit serving the respective content provider (CP1 Interface Unit or CP2 interface unit) the information is provided to a central caching data selection routine.

The routine may have more information available, e.g. analysis of available (unsecured) data in the mobile network may provide additional information about highly interesting download or streaming data from various mobile devices (information U_{x,y} in Fig. 1). Also, the routing is taking past information into account, e.g. collected information about the expected delay of media usage by the users of NW 1 in comparison to global users, so that the tendency can be predicted more precise. Also, cross-content provider information may be available, e.g. a prediction of media data usage from one content provider triggered by viral content of another provider. In addition, information about actual data usage from cached media data may be available as mentioned above. Any kind of relation of data offerings, data usage, time, location and user behaviour or preference may be stored in one or more data bases and used by the central caching data selection routine. The routine will select data from content providers to be cached by mobile devices or entities of the mobile network. Before the data can be distributed within NW 1 the data has to be requested from the respective content providers and transmitted to the mobile network NW 1. The data may be requested centrally, e.g. by the caching data control entity and distributed after reception within the mobile network. Alternatively, the caching data control entity informs entities of the network about the data to be cached and these entities request, receive and further process the data autonomously.

In the concrete example, the selection routine may use the following rules
Content most often requested is prioritized
Smaller single media are prioritized over larger pieces of media
Per business relations, content provider 1 is favoured

These rules may for example result in the following list of data to be broadcast:
D_{1,1}, D_{1,2}, D_{2,1}

The different areas identified in the information received from the content providers may correlate to different sub-networks of NW 1, e.g. area 1 may be served by sub-network 1 of Figs. 2 and 3, area 2 may be served by sub-network 2 of Figs. 2 and 3 and area 3 may be served by sub-networks 3 and 4 not shown in the figures.

The distribution of the contents above may be determined by the caching data control entity as follows:
Sub-network 1: D_{1,1}, D_{1,2}, D_{2,1}
Sub-network 2: D_{1,1}, D_{2,1}

This is only one arbitrary example of rules and a strategy that may be applied in the caching data control entity. Any other or additional rules, algorithms and strategy may apply and the result will be different from above. Also, the example is very simplified in the sense that in real-world deployments the number of individual pieces of media data would be higher by magnitudes, e.g. a content provider may inform about hundreds of pieces of media and the information would potentially distinguish hundreds of locations, if available. Also, the number of content providers a typical network is connected to may be several tens and not limited to two.

As a next step the caching data control entity in the mobile network would request the identified media from the content provider. This may be done exactly as an end-device would request the media, i.e. by connecting to the content provider's server via HTTPS and transmitting one or more GET requests. Usually, the media data is present in form of a playlist (.m3u8 file) and several media data files containing the actual media or video data, so the caching data control entity would request and receive the full media data from the content provider.

The caching data control entity will then distribute the media data to the respective caching entities in the mobile network. These can be either caching network entity as depicted in Figs. 2 and 3 or it can be distribution functions of the network or sub-networks like e.g. a broadcasting entity within the mobile network for distribution of the caching data to mobile devices of the network.

The distribution by the caching data control entity may include a selective distribution. In our example, sub-network 1 will receive all three pieces of media data received from the content providers while sub-network 2 receives only two of these due to the caching strategy applied by the central caching data selection routine.

The distribution of data may also include a diversified content distribution scheme. For example, in sub-network 1 the data in question may be disseminated in broadcast fashion to the mobile devices to be cached there, while in sub-network 2 the data in question may be transmitted only to the caching NW entities associated with sub-network 2. Such diversified content distribution schemes may be under control of the central caching data selection routine as well.

The data will then be stored in the respective caches of the mobile devices or network entities and future requests for media data from applications or mobile devices may be served directly from the cache.

The deployment described above would allow an efficient transmission of most popular information using information from content providers to predict data usage in a mobile network. A benefit of this technique over data analysis in the mobile network is that it works properly with security established between a client on a mobile device and a server of the content provider while protecting user's privacy.

However, the client on the mobile device is expecting to be served by the mobile network without degradation of the security compared to dedicated requests and transmission of the content between device and content server. The main increase of efficiency of the caching mechanism results from replacing many dedicated connections between mobile devices and the content server with one or a few connections for caching data delivery in advance of the actual data consumption. Obviously, the mechanisms of TLS / HTTPS cannot be applied, as there is no dedicated client-to-server-connection and data cannot be encrypted by the server after it has been delivered to the caches.

Thus, one key aspect of this invention is the re-establishment of secured data integrity while using the described distribution mechanisms for caching.

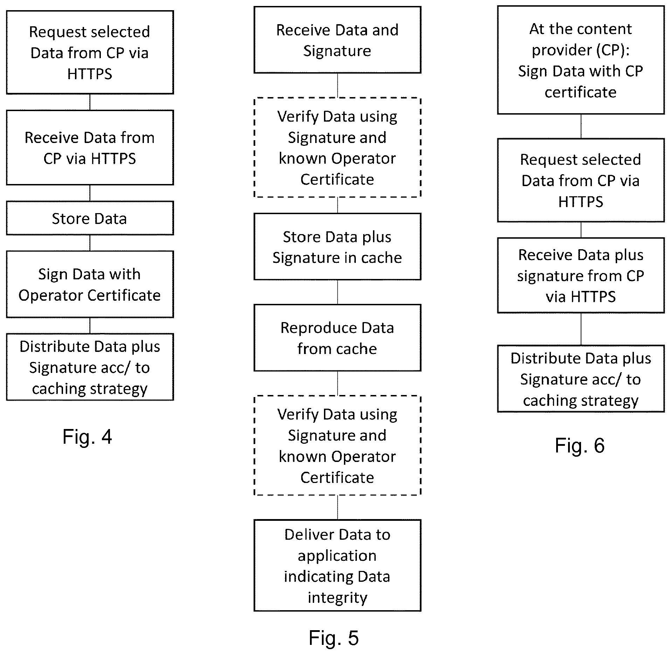

Fig. 4 depicts a procedure in the mobile network that is going back to the step where the caching data control entity in the mobile network requests the selected media from the content provider. This step may be done using a TLS-secured HTTPS-connection between the mobile network and the content provider. Thus, the mobile network verifies the server of the content provider and receives the media data through a secured connection. In other words, the integrity and origin of the data received by the mobile network and stored in the network is not in doubt.

Now, in accordance with this invention, the operator can use his own certificate to sign the data or parts of the data. The operator signature is distributed together with the media data to the caching entities. Alternatively, the operator signature is provided to the caching entities before media data is distributed to the caching entities, e.g. in a dedicated transmission or stored on a smart card, UICC, that is part of the caching device. With this mechanism, the operator replaces the security established by the content provider with an operator established security. Assuming that mobile devices and their users trust the operator, this replacement, based on secure reception of the data by the operator, does not create doubt in the data integrity.

Fig. 5 depicts the procedure in the mobile device. The mobile device receives the data for caching including the operator signature. It may use the signature to verify integrity of the data and store only verified data. Otherwise, if integrity is verified at a later point of the procedure, the signature is stored together with the data (therefore the step is shown in dashed lines).

When an application requests the data, usually requesting a secure connection to the application server, the request is served directly from the cache. The data is reproduced and if not done earlier, the integrity is verified using the signature and the known operator certificate. The data is then delivered to the application and indicated to be received securely. This indication may be done in various ways, depending on the application programming interface the applications use. One way is to use a separate security flag when delivering the data, another way is to sign and encrypt the data within the mobile device between cache and application to emulate a secure web server towards the application. Various deployments are possible which all ensure that security is intact for the data delivered.

An alternative embodiment of a secure delivery is based on the content provider to sign the data with a private key before it is delivered to the mobile network together with the signature. This is depicted in Fig. 6. The content provider delivers the data plus signature on request from the mobile network. The mobile network distributes the data plus content provider signature to the caching entities. In this alternative the public certificate of the content provider is used by the mobile devices to verify the data integrity, otherwise the procedure is the same as depicted in Fig.5.

Preferred aspects of the invention include:
1. A method for improving data caching by a user equipment, UE, device, the UE device being attached to a mobile communications network, the method comprising:
   in an entity of the mobile communications network, receiving information from an internet content provider concerning data transmission to devices requesting to receive the data from the content provider;
   determining in the entity of the mobile communications network, based on the information, data selected to be transmitted by the mobile communications network for caching by at least one UE device;
   obtaining by the entity of the mobile communications network the selected data from the internet content provider; and
   transmitting to the UE device the selected data for caching by the at least one UE device.
2. The method according to aspect 1, wherein the selected data is transmitted with a certification measure.
3. The method according to aspect 2, wherein a certification measure is performed in order to ensure at least one of an integrity, an authenticity and a confidentiality of the selected data.
4. The method according to any preceding aspect, wherein the information received from an internet content provider concerning data transmission to devices requesting to receive the data from the content provider does not include information about dedicated data transmissions to the UE device.
5. The method according to any preceding aspect, wherein the information from the internet content provider comprises information about the location of UE devices requesting to receive the data from the content provider,
   the determining comprises determining one or more locations in which the selected data is to be transmitted for caching, and
   the providing the selected data comprises providing the selected data in the determined one or more locations.
6. The method according to any preceding aspect, wherein the information from the internet content provider comprises descriptive information about users of UE devices requesting to receive the data from the content provider,
   the determining comprises determining one or more UE devices to which the selected data is to be transmitted for caching based on the descriptive information of the users, and
   the providing the selected data comprises providing the selected data to the determined one or more UE devices.
7. The method according to any preceding aspect, wherein the mobile communications network entity attaches a signature to the selected data as the certification measure.
8. The method according to any one of aspects 1 to 6, wherein a signature of the content provider is attached to the selected data as the certification measure.
9. The method according to aspect 8, wherein the selected data is signed using a key of the content provider.
10. A user equipment, UE, device adapted to cache an item of data in response to an instruction from an entity of a mobile communications network, wherein the UE device is further adapted to retrieve the item of data from its cache at a later point in time in the event of a demand for the item of data and to verify an integrity of the item of data using a security measure attached to the data.
11. The UE device according to aspect 10, wherein the UE device is adapted to verify the integrity of the item of data before the item of data is cached.
12. An entity of a mobile communications network arranged to receive information from an internet content provider concerning data consumption by devices requesting to receive the data from the content provider, to determine selected data to be transmitted for caching by at least one user equipment device, to obtain the selected data from the internet content provider and to provide to the at least one UE device the selected data for caching by the UE device together with a certification measure.
13. The entity of a mobile communications network according to aspect 12, wherein the information from the internet content provider comprises information about the location of devices requesting to receive the data from the content provider, and the entity is arranged to determine one or more locations in which the selected data is to be transmitted for caching.
14. The entity of a mobile communications network according to aspect 12 or aspect 13, wherein the information from the internet content provider comprises descriptive information about users of devices requesting to receive the data from the content provider, and the entity is arranged to determine one or more devices to which the selected data is to be transmitted for caching based on the descriptive information of the users.

## Claims

1. A method for improving data caching by a user equipment, UE, device, the UE device being attached to a mobile communications network, the method comprising:
in an entity of the mobile communications network, receiving, from an internet content provider, age and/or gender and/or user descriptive information of users of the content, the information concerning data transmission to devices requesting to receive the data from the content provider;
determining in the entity of the mobile communications network, based on the information, data selected to be transmitted by the mobile communications network for caching by at least one UE device;
obtaining by the entity of the mobile communications network the selected data from the internet content provider; and
transmitting to the UE device the selected data for caching by the at least one UE device.

2. The method according to claim 1, wherein the selected data is transmitted with a certification measure.

3. The method according to claim 2, wherein a certification measure is performed in order to ensure at least one of an integrity, an authenticity and a confidentiality of the selected data.

4. The method according to any preceding claim, wherein the information received from an internet content provider concerning data transmission to devices requesting to receive the data from the content provider does not include information about dedicated data transmissions to the UE device.

5. The method according to any preceding claim, wherein the information from the internet content provider comprises information about the location of UE devices requesting to receive the data from the content provider,
the determining comprises determining one or more locations in which the selected data is to be transmitted for caching, and
the providing the selected data comprises providing the selected data in the determined one or more locations.

6. The method according to any preceding claim, wherein the information from the internet content provider comprises descriptive information about users of UE devices requesting to receive the data from the content provider,
the determining comprises determining one or more UE devices to which the selected data is to be transmitted for caching based on the descriptive information of the users, and
the providing the selected data comprises providing the selected data to the determined one or more UE devices.

7. The method according to any preceding claim, wherein the mobile communications network entity attaches a signature to the selected data as the certification measure.

8. The method according to any one of claims 1 to 6, wherein a signature of the content provider is attached to the selected data as the certification measure.

9. The method according to claim 8, wherein the selected data is signed using a key of the content provider.

10. An entity of a mobile communications network arranged to receive information from an internet content provider the information comprising age and/or gender and/or user descriptive information of users of the content concerning data consumption by devices requesting to receive the data from the content provider, to determine using the received information selected data to be transmitted for caching by at least one user equipment device, to obtain the selected data from the internet content provider and to provide to the at least one UE device the selected data for caching by the UE device together with a certification measure.

11. The entity of a mobile communications network according to claim 10, wherein the information from the internet content provider comprises information about the location of devices requesting to receive the data from the content provider, and the entity is arranged to determine one or more locations in which the selected data is to be transmitted for caching.

12. The entity of a mobile communications network according to claim 10 or claim 11, wherein the information from the internet content provider comprises descriptive information about users of devices requesting to receive the data from the content provider, and the entity is arranged to determine one or more devices to which the selected data is to be transmitted for caching based on the descriptive information of the users.
